(19) Europäisches Patentamt
European Patent Office
Office européen des brevets

(11) **EP 4 249 310 A1**

(12) **EUROPEAN PATENT APPLICATION**
published in accordance with Art. 153(4) EPC

(43) Date of publication:
**27.09.2023 Bulletin 2023/39**

(21) Application number: **21913694.2**

(22) Date of filing: **30.11.2021**

(51) International Patent Classification (IPC):
***B60L 7/10*** (2006.01)

(52) Cooperative Patent Classification (CPC):
**B60L 7/10; B60L 7/18; B60L 15/20; B60W 30/18**

(86) International application number:
**PCT/CN2021/134236**

(87) International publication number:
**WO 2022/142953 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.12.2020 CN 202011577626**

(71) Applicant: **Huawei Technologies Co., Ltd.**
**Shenzhen, Guangdong 518129 (CN)**

(72) Inventors:
• **HOU, Maosheng**
  **Shenzhen, Guangdong 518129 (CN)**
• **WEN, Jingbin**
  **Shenzhen, Guangdong 518129 (CN)**
• **LIU, Shenglin**
  **Shenzhen, Guangdong 518129 (CN)**
• **WANG, Li**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **VEHICLE BRAKING CONTROL METHOD AND DEVICE, AND VEHICLE BRAKING SYSTEM**

(57) A vehicle braking control method includes: obtaining a vehicle speed (S20); when the vehicle speed is greater than a first speed, performing energy recovery braking (S60); when the vehicle speed is less than the first speed and greater than a second speed, performing motor reverse braking and mechanical braking (S71), where braking force generated by the motor reverse braking is superposed with braking force generated by the mechanical braking; and when the vehicle speed is less than the second speed, performing mechanical braking (S83), where the mechanical braking generates braking force. A braking control apparatus and a vehicle braking system are further disclosed. The braking control method and apparatus implement a combination of three braking manners: the energy recovery braking, the motor reverse braking, and the mechanical braking, to ensure a braking effect, reduce electric energy consumed at a low speed, and avoid a problem of overheating or failure of a mechanical braking apparatus caused by frequent braking of a vehicle when the vehicle moves downhill for a long time or at a high speed.

FIG. 4

## Description

## TECHNICAL FIELD

This application relates to the vehicle braking field, and in particular, to the braking field of electric vehicles, and specifically, to a vehicle braking control method and apparatus, and a vehicle braking system.

## BACKGROUND

In daily life, for example, a traffic accident caused by a truck braking failure usually occurs. Causes of the truck braking failure are as follows: 1. There is a serious overload. 2. A brake wheel hub is overheated due to long-time braking during downhill and frequent braking in a high-speed state, resulting in thermal decline of a mechanical braking apparatus. 3. A hydraulic system failure occurs due to a lack of maintenance of a braking system. Therefore, how to avoid a traffic accident caused by overheating of the mechanical braking apparatus or the hydraulic system failure becomes an urgent problem in the industry.

## SUMMARY

In view of the foregoing problems in the conventional technology, an objective of embodiments of this application is to provide a vehicle braking control method and apparatus, and a vehicle braking system, so that different braking solutions can be provided for a vehicle based on different scenarios, and a risk of a traffic accident caused by a braking failure is reduced.

To achieve the foregoing objective, a first aspect of this application provides a vehicle braking control method, including: obtaining a vehicle speed; when the vehicle speed is greater than a first speed, performing energy recovery braking, generating power by using a motor to recover energy, and charging a battery; when the vehicle speed is less than the first speed and greater than a second speed, performing motor reverse braking and mechanical braking, where braking force generated by the motor reverse braking is superposed with braking force generated by the mechanical braking, and electric energy generated by the motor is consumed by a power consumption apparatus; and when the vehicle speed is less than the second speed, performing mechanical braking, where the mechanical braking generates braking force. The power consumption apparatus may be a resistor, an electric device, or the like in a circuit, and the electric device may be, for example, a cooling apparatus.

By using the foregoing solution, energy recovery at a high speed (greater than the first speed) can ensure an energy recovery effect, so that the vehicle speed is steadily reduced, and a case in which a mechanical braking failure is caused by overheating of a braking wheel hub caused by long-time and frequent mechanical braking is reduced.

At a medium speed (less than the first speed and greater than the second speed), the motor reverse braking and the mechanical braking are performed. In this way, the motor reverse braking and the mechanical braking back up each other, to avoid or suppress a case in which sufficient braking force cannot be provided when one of the two is faulty or the like.

Moreover, at the medium speed, braking force produced by the energy recovery braking is small, so it is possible that sufficient braking force cannot be provided. However, in this application, a combination of the motor reverse braking and the mechanical braking is used. Compared with a combination of the energy recovery braking and the mechanical braking, a case in which sufficient braking force cannot be provided can be suppressed.

In a possible implementation, when the mechanical braking is performed, the motor reverse braking is further performed when a temperature of a mechanical braking apparatus exceeds a predetermined temperature, and the braking force generated by the motor reverse braking is superposed with the braking force generated by the mechanical braking.

According to the foregoing solutions, when the mechanical braking apparatus is overheated, the motor reverse braking is connected, to ensure that total braking force remains unchanged, and avoid that the vehicle cannot be effectively braked when the braking force provided by the mechanical braking apparatus decreases or even the braking fails due to overheating, thereby causing a traffic accident.

In addition, at a low speed (less than the second speed), the motor reverse braking is connected only when the mechanical braking apparatus is overheated. Compared with a case in which the reverse braking is always connected, the motor reverse braking can be avoided as much as possible. This reduces energy consumption.

In a possible implementation, the temperature of the mechanical braking apparatus is obtained by calculating a friction coefficient based on a correspondence between the temperature of the mechanical braking apparatus and a friction coefficient of a lining of the mechanical braking apparatus, and the friction coefficient is obtained by using the following method:

obtaining a total required braking torque based on a product of the vehicle speed, a vehicle load, and a wheel radius;
obtaining a motor braking torque based on a motor speed, a motor voltage, and a motor external characteristic curve;
obtaining a mechanical braking torque based on a difference between the total required braking torque and the motor braking torque; and
obtaining the friction coefficient of the lining of the mechanical braking apparatus based on the mechanical braking torque and hydraulic strength, a lining radius of the mechanical braking apparatus, and a lining area of the mechanical braking apparatus.

By using the foregoing solution, a problem that the temperature of the mechanical braking apparatus is difficult to be obtained through measurement because it is difficult to install a temperature sensor for the mechanical braking apparatus is resolved.

In a possible implementation, when the motor reverse braking is performed, the electric energy generated by the motor is used to drive a cooling unit to perform a cooling operation on the motor.

By using the foregoing solution, when the motor reverse braking is performed, electric energy in a circuit can be used to drive the cooling unit, to implement energy reuse and heat dissipation of the motor.

In a possible implementation, the cooling operation includes: when a braking instruction is received, calculating motor thermal power based on an obtained current of the motor and the current of the motor; and controlling the cooling unit to perform the cooling operation based on the motor thermal power

In the foregoing solution, the motor thermal power is used as a parameter for determining whether the motor is overheated, to avoid a lag problem caused by determining whether the motor is overheated only by detecting the temperature of the motor, and control the temperature of the motor more accurately.

In a possible implementation, the cooling operation further includes: controlling the cooling unit to perform the cooling operation on the motor based on an obtained motor temperature.

In the foregoing solution, both the motor thermal power and the temperature of the motor are used as parameters for determining whether the motor is overheated, to avoid a lag problem caused by determining whether the motor is overheated only by detecting the temperature of the motor, and control the temperature of the motor more accurately.

In a possible implementation, when the energy recovery braking is performed, the mechanical braking is further performed when total required braking force is greater than maximum braking force that can be provided by the energy recovery braking, and the braking force generated by the mechanical braking is superposed with braking force generated by the energy recovery braking.

By using the foregoing solution, energy recovery efficiency can be ensured, and a traffic accident caused by insufficient braking force can be avoided when the vehicle performs energy recovery.

In a possible implementation, when the mechanical braking and the motor reverse braking are performed, the braking force of the motor reverse braking is initially greater than the braking force of the mechanical braking, the braking force of the motor reverse braking decreases with a speed decrease, and the braking force of the mechanical braking increases with a speed decrease.

In a possible implementation, when a battery level is less than a first battery level, the energy recovery braking is performed.

By using the foregoing solution, a battery overcharging phenomenon can be avoided.

In a possible implementation, the vehicle is an electric truck.

According to a second aspect of this application, a vehicle braking control apparatus is provided, including: a speed obtaining module, configured to obtain a vehicle speed; and a vehicle braking control module, configured to control a vehicle to perform braking based on the vehicle speed. The vehicle braking control module is configured to: when the vehicle speed is greater than a first speed, perform energy recovery braking, generate power by using a motor to recover energy, and charge a battery to generate braking force; when the vehicle speed is less than the first speed and greater than a second speed, perform motor reverse braking and mechanical braking, where braking force generated by the motor reverse braking is superposed with braking force generated by the mechanical braking, and electric energy generated by the motor is consumed by a power consumption apparatus; and when the vehicle speed is less than the second speed, perform at least mechanical braking, where the mechanical braking generates braking force.

In a possible implementation, when the mechanical braking is performed, the motor reverse braking is further performed when a temperature of a mechanical braking apparatus exceeds a predetermined temperature, and the braking force generated by the motor reverse braking is superposed with the braking force generated by the mechanical braking.

In a possible implementation, when the braking force generated by the motor reverse braking is superposed with the braking force generated by the mechanical braking, the braking force of the motor reverse braking increases with a speed decrease, and the braking force of the mechanical braking decreases with a speed decrease.

In a possible implementation, the temperature of the mechanical braking apparatus is obtained by calculating a friction coefficient based on a correspondence between the temperature of the mechanical braking apparatus and a friction coefficient of a lining of the mechanical braking apparatus, and the friction coefficient is obtained by using the following method:

obtaining a total required braking torque based on a product of the vehicle speed, a vehicle load, and a wheel radius;
obtaining a motor braking torque based on a motor speed, a motor voltage, and a motor external characteristic curve;
obtaining a mechanical braking torque based on a difference between the total required braking torque and the motor braking torque; and
obtaining the friction coefficient of the lining of the mechanical braking apparatus based on the mechanical braking torque and hydraulic strength, a lining radius of the mechanical braking apparatus, and a lining area of the mechanical braking apparatus.

In a possible implementation, when the motor reverse braking is performed, the electric energy generated by the motor is used to drive a cooling unit to perform a cooling operation on the motor.

In a possible implementation, the cooling operation includes:

when a braking instruction is received, calculating motor thermal power based on an obtained current of the motor and the current of the motor; and controlling the cooling unit to perform the cooling operation based on the motor thermal power.

In a possible implementation, the cooling operation further includes: controlling the cooling unit to perform the cooling operation on the motor based on an obtained motor temperature.

In a possible implementation, when the energy recovery braking is performed, the mechanical braking is further performed when total required braking force is greater than maximum braking force that can be provided by the energy recovery braking, and the braking force generated by the mechanical braking is superposed with braking force generated by the energy recovery braking.

In a possible implementation, when the motor reverse braking and the mechanical braking are performed, the braking force of the motor reverse braking is initially greater than the braking force of the mechanical braking, the braking force of the motor reverse braking decreases with a speed decrease, and the braking force of the mechanical braking increases with a speed decrease.

In a possible implementation, when a battery level is less than a first battery level, the energy recovery braking is performed.

In a possible implementation, the vehicle is an electric truck.

Advantages and effects of the vehicle braking control apparatus provided in the second aspect of this application are the same as those of the vehicle braking control method provided in the first aspect of this application and possible implementations of the vehicle braking control method. Details are not described herein again.

A third aspect of this application provides a vehicle braking system, including: a motor, a mechanical braking apparatus, a battery, a vehicle braking control apparatus, a vehicle speed obtaining apparatus, and a plurality of control switches, where the vehicle braking control apparatus is configured to control connection and disconnection of the control switches based on a vehicle speed obtained in real time to adjust a braking solution, where when the vehicle speed is greater than a first speed, energy recovery braking is performed, where a vehicle speed control switch is located at a first speed limit, an energy recovery switch is located at a first energy recovery limit, a braking switch is connected, the motor and the battery form a series circuit, power is generated by using the motor to recover energy, and the battery is charged to generate braking force; when the vehicle speed is less than the first speed and greater than a second speed, motor reverse braking and mechanical braking are performed, where a vehicle speed control switch is located at a second speed limit, an energy recovery switch is located at a second energy recovery limit, a braking switch is disconnected, a braking force supplementary switch is connected, the motor and the battery form a series circuit, the mechanical braking apparatus and the motor form a parallel circuit, braking force generated by the motor reverse braking is superposed with braking force generated by the mechanical braking, and electric energy generated by the motor is consumed by a power consumption apparatus; and when the vehicle speed is less than the second speed, a vehicle speed control switch is located at a third speed limit, the mechanical braking apparatus and the battery form a series circuit, mechanical braking is performed, and the mechanical braking generates braking force.

In a possible implementation, a mechanical braking apparatus temperature control switch is further included. The motor reverse braking is further performed when a temperature of the mechanical braking apparatus exceeds a predetermined temperature, the mechanical braking apparatus temperature control switch is connected, the mechanical braking apparatus and the motor further form a parallel circuit, and the braking force generated by the motor reverse braking is superposed with the braking force generated by the mechanical braking.

In a possible implementation, when the braking force generated by the motor reverse braking is superposed with the braking force generated by the mechanical braking, the braking force of the motor reverse braking increases with a speed decrease, and the braking force of the mechanical braking decreases with a speed decrease.

In a possible implementation, the temperature of the mechanical braking apparatus is obtained by calculating a friction coefficient based on a correspondence between the temperature of the mechanical braking apparatus and a friction coefficient of a lining of the mechanical braking apparatus, and the friction coefficient is obtained by using the following method:

obtaining a total required braking torque based on a product of the vehicle speed, a vehicle load, and a wheel radius; obtaining a motor braking torque based on a motor speed, a motor voltage, and a motor external characteristic curve; obtaining a mechanical braking torque based on a difference between the total required braking torque and the motor braking torque; and

obtaining the friction coefficient of the lining of the mechanical braking apparatus based on the mechanical braking torque and hydraulic strength, a lining radius of the mechanical braking apparatus, and a lining area of the mechanical braking apparatus.

In a possible implementation, a cooling apparatus is further included. When the motor reverse braking is performed, the motor and the cooling apparatus further form a series circuit, and the electric energy generated by the motor is used to drive a cooling unit to perform a cooling operation on the motor.

In a possible implementation, a motor control apparatus is further included, configured to: when a braking instruction is received, obtain a current of the motor, where the vehicle braking control apparatus calculates motor thermal power based on the current of the motor, and the cooling control apparatus controls the cooling unit to perform the cooling operation on the motor based on the motor thermal power

In a possible implementation, a temperature sensor is further included, configured to obtain a temperature of the motor; and a cooling control apparatus is further included, configured to control the cooling apparatus to perform the cooling operation on the motor based on the temperature.

In a possible implementation, the mechanical braking is further performed when total required braking force is greater than maximum braking force that can be provided by the energy recovery braking, the braking force supplementary switch is connected, the motor and the mechanical braking apparatus further form a parallel circuit, and the braking force generated by the mechanical braking is superposed with the braking force generated by the energy recovery braking.

In a possible implementation, when the motor reverse braking and the mechanical braking are performed, the braking force of the motor reverse braking is initially greater than the braking force of the mechanical braking, the braking force of the motor reverse braking decreases with a speed decrease, and the braking force of the mechanical braking increases with a speed decrease.

In a possible implementation, when a battery level is greater than a first battery level, the mechanical braking is performed, a battery level control switch is located at a second battery level limit, and the battery and the mechanical braking apparatus form a series circuit.

In a possible implementation, the vehicle is an electric truck.

Advantages and effects of the vehicle braking system provided in the third aspect of this application are the same as those of the vehicle braking control method provided in the first aspect of this application and possible implementations of the vehicle braking control method. Details are not described herein again.

A fourth aspect of this application provides a computing device, including: a bus; a communication interface connected to the bus; at least one processor connected to the bus; and at least one memory, where the memory is connected to the bus and stores program instructions, and when the program instructions are executed by the at least one processor, the at least one processor is enabled to perform any method provided in the first aspect and the possible implementations of the first aspect.

According to a fifth aspect of this application, a computer-readable storage medium is provided. The computer-readable storage medium stores program instructions, and when the program instructions are executed by a computer, the computer is enabled to perform any method provided in the first aspect and the possible implementations of the first aspect.

A sixth aspect of this application provides a computer program. A computer can run the program to perform any method provided in the first aspect and the possible implementations of the first aspect, or play a role in any apparatus provided in the second aspect and the possible implementations of the second aspect.

These aspects and another aspect of this application are clearer and easier to understand in descriptions of the following embodiments (a plurality of embodiments).

**BRIEF DESCRIPTION OF DRAWINGS**

The following further describes features of this application and a relationship between the features with reference to the accompanying drawings. The accompanying drawings are all examples, and some features are not shown in actual proportions. In addition, in some accompanying drawings, common features that are not mandatory for this application in the field of this application may be omitted. Alternatively, additional features that are not mandatory for this application are not shown. A combination of the features shown in the accompanying drawings is not intended to limit this application. In addition, in this specification, content referred to by same reference signs is also the same. The specific accompanying drawings are described as follows:

FIG. 1 is a schematic diagram of a structure of a vehicle braking system according to an embodiment of this application;

FIG. 2 is a schematic diagram of a structure of a cooling system for cooling a motor according to an embodiment of this application;

FIG. 3 is a flowchart of a vehicle braking control method according to an embodiment of this application;

FIG. 4 is a flowchart of a vehicle braking method according to an embodiment of this application;

FIG. 5a to FIG. 5f are schematic diagrams of a change of motor braking force and mechanical braking force with time when a vehicle performs braking;

FIG. 6a to FIG. 6d are schematic diagrams of a change of motor braking force and mechanical braking force with time in a time period from time when a vehicle determines braking to time when the vehicle stops braking;

FIG. 7 is a flowchart of a motor cooling control method according to an embodiment of this application;

FIG. 8a to FIG. 8g are schematic diagrams of a control circuit of a vehicle braking system according to an embodiment of this application; and

FIG. 9 is a schematic diagram of a structure of a computing device according to an embodiment of this application.

Description of drawing marks

braking pedal control switch 1; energy recovery switch 2; speed sensor control switch 3; mechanical braking apparatus overheat switch 4; braking force supplementary switch 5; battery level control switch 6; braking switch 7; diode 8; A/D converter 9; sensor 10; speed sensor 11; hydraulic strength sensor 12; angle sensor 13; load sensor 14; temperature sensor 15; vehicle braking control apparatus 20; calculation module 21; braking allocation module 22; motor control apparatus 30; mechanical braking control apparatus 40; motor 50; mechanical braking apparatus 60; alarm apparatus 70; cooling control apparatus 80; cooling apparatus 90; vehicle braking system 100; cooling system 110; battery 120; computing device 1500; processor 1510; memory 1520; communication interface 1530; and bus 1540.

**DESCRIPTION OF EMBODIMENTS**

The following describes technical solutions in the specific implementations of this application with reference to the accompanying drawings in the implementations. Before specific content of the technical solutions is described, terms used in this application are first briefly described.

In this specification and claims, the terms "first, second, third, and the like" or similar terms such as a module A, a module B, and a module C are merely used to distinguish between similar objects, and do not represent a specific order of the objects. It may be understood that specific orders or sequences may be exchanged if permitted, so that embodiments of this application described herein can be implemented in an order other than an order illustrated or described herein.

The term "include" used in this specification and claims should not be construed as being limited to the content listed below, and does not exclude other elements or steps. Therefore, "include" should be construed as specifying existence of a mentioned feature, whole, step, or part, but does not preclude existence or addition of one or more other features, wholes, steps, or parts and their groups. Therefore, the expression "a device including an apparatus A and an apparatus B" should not be limited to a device including only components A and B.

"One embodiment" or "an embodiment" mentioned in this specification indicates that a particular feature, structure or property that is described with reference to the embodiment is included in at least one embodiment of this application. Therefore, the terms "in one embodiment" or "in an embodiment" that appear in this specification do not necessarily indicate a same embodiment, but may indicate a same embodiment. Further, in one or more embodiments, the particular features, structures, or properties can be combined in any proper manner, as will be clear from this disclosure to a person of ordinary skill in the art.

Unless otherwise defined, all technical and scientific terms used in this specification have same meanings as those usually understood by a person skilled in the art of this application. In case of any inconsistency, the meaning described in this specification or the meaning obtained according to the content recorded in this specification shall prevail. In addition, the terms used in this specification are merely for the purpose of describing embodiments of this application, but are not intended to limit this application.

Mechanical braking (Mechanical Braking), also referred as braking, refers to an action of stopping or reducing a speed of a running locomotive, vehicle, or another transportation tool or machinery by using a mechanical apparatus. Commonly used mechanical braking modes of vehicles are classified into drum braking and disc braking. A large truck usually uses the drum braking. A mechanical braking apparatus is usually driven by a brake motor, which drives a brake to friction with wheels to generate braking force.

Braking energy recovery (Braking Energy Recovery), referred to as energy recovery below, is usually applied to a vehicle or a rail transit, and refers to an operation of charging the battery when reverse electric potential energy generated by motor rotation is higher than a voltage of a driving motor when the vehicle is sliding or braking.

Motor reverse braking (Motor Reverse Braking) refers to an operation of fast braking a motor through a reverse torque on a motor rotor. The reverse torque of the motor reverse braking is realized by changing a direction of a rotating magnetic field (switching two-phase stator windings).

A superposed regenerative braking system (Regenerative Braking System), referred to as a RBS below, works as follows: After a driver steps on a braking pedal, a mechanical braking apparatus coupled with the braking pedal performs a braking operation, and braking force generated by motor reverse is superposed on mechanical braking force as auxiliary braking force.

A cooperative regenerative braking system (Cooperative Regenerative Braking System), referred to as a CRBS below, works as follows: After a driver steps on a braking pedal, a sensor obtains a stepping angle of a current braking pedal, and a control apparatus determines a braking requirement of the driver based on an angular velocity, and calculates braking force required by the vehicle based on the stepping angle of the braking pedal and a vehicle speed. Then, motor reverse braking is used as a main braking source to perform a braking operation. When the braking force produced by the motor reverse braking is insufficient, the mechanical braking is used as compensation of the motor reverse braking.

A vehicle body electronic stability program (Electronic Stability Program), referred to as ESP below, works as follows: Vehicle driving status information sent from sensors is analyzed and calculated, and then an instruction is sent to each controller of a vehicle, to maintain a dynamic balance of the vehicle.

Related technology 1:

At present, a hydraulic retarding apparatus is used to assist a vehicle in braking. The hydraulic retarding apparatus includes a housing as a stator and a rotor located in the housing. Both the rotor and the stator are provided with blades. The housing is connected to a rear end or a frame of a vehicle speed changing apparatus, and the rotor is connected to a transmission shaft of the vehicle by using a hollow shaft. When working, the rotor rotates relative to the shell, using liquid damping to produce a slow speed. The pressure is applied to an oil pool by a control valve, so that working fluid is filled in a working cavity between the rotor and the stator. When the rotor rotates, a torque is applied to the stator by using the working fluid, and a reverse torque of the stator becomes a braking torque of the rotor. A size of the torque depends on a volume and pressure of the liquid in the working cavity (depending on a brake strength gear of the control valve) and a rotor speed. Kinetic energy of the vehicle is converted into heat energy through friction between the rotor and the working fluid and impact of the rotor on the stator, which increases a temperature of the working fluid. The working fluid is introduced into a heat exchange apparatus and circulates to transfer heat to cooling water, which is then dissipated by an engine cooling system.

Coupling and separation between the rotor of the hydraulic retarding apparatus and the transmission shaft of the vehicle may cause a long delay. When the vehicle is running but the retarding apparatus does not work, the rotor rotates with the rotation shaft, which consumes a certain amount of power. The structure of the retarding apparatus is complex, and costs are high. Costs of installing the hydraulic retarding apparatus are high.

Related technology 2:

The RBS or the CRBS is used for braking. In the RBS, a braking pedal is coupled with a mechanical braking mechanism. In a braking process, the mechanical braking apparatus brakes as long as the braking pedal is stepped down. Motor reverse braking is only superposed on mechanical braking. Therefore, the motor reverse braking is not a main braking source to provide braking force.

The CRBS focuses on energy recovery, and braking is an additional benefit of the energy recovery. When a vehicle speed is high, energy recovered by the motor can generate large braking force. However, when a vehicle speed is low, braking generated by energy recovered by the motor is small, which cannot meet a braking requirement. In addition, the CRSB cannot provide reliable braking guarantee when the mechanical braking apparatus is overheated or faulty.

In view of the foregoing problems of the related technologies, this application provides a vehicle braking control method and apparatus, and a vehicle braking system. According to a vehicle speed and a vehicle status, three braking solutions are selected: energy recovery, motor reverse braking, and mechanical braking. In this way, the energy recovery is mainly performed when a vehicle is braking at a high speed, the motor reverse braking and the mechanical braking are simultaneously performed when the vehicle is braking at a medium speed, and the mechanical braking is mainly performed when the vehicle is braking at a low speed. The braking system, the braking method, and the braking apparatus in this application are applied to braking of an electric vehicle or a hybrid vehicle, for example, applied to braking of a large electric truck.

The following describes implementations of this application in detail with reference to the accompanying drawings.

First implementation: vehicle braking system

The first implementation of this application relates to a vehicle braking system. The vehicle braking system is applied to braking of a large electric truck.

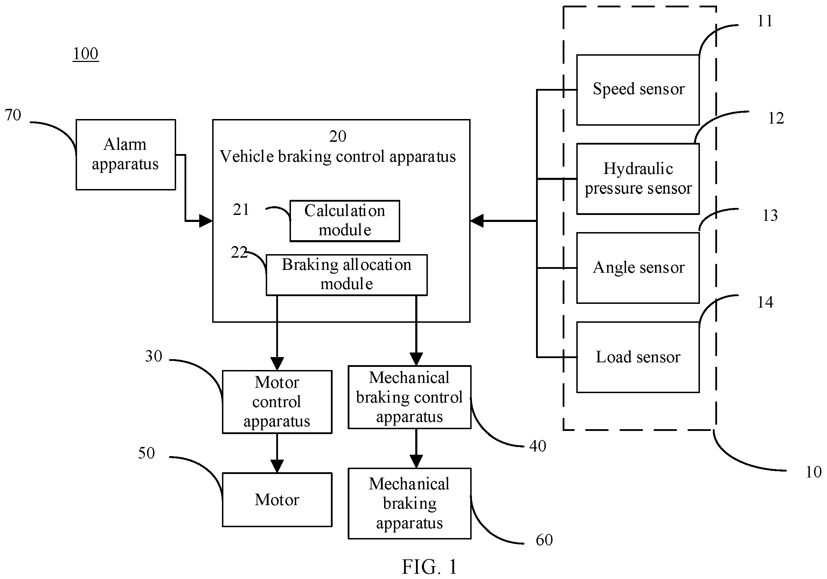

FIG. 1 is a schematic diagram of a structure of a vehicle braking system 100 according to an embodiment of this application. The vehicle braking system 100 includes a sensor 10, a vehicle braking control apparatus 20, a motor control apparatus 30, a mechanical braking control apparatus 40, a motor 50, a mechanical braking apparatus 60, and an alarm apparatus 70.

In an implementation of this application, the motor 50 can drive a direct current motor used by the vehicle when the vehicle travels.

The sensor 10 includes a speed sensor 11 configured to detect a vehicle speed, a hydraulic strength sensor 12 configured to detect hydraulic strength of a mechanical braking apparatus, an angle sensor 13 configured to detect an angle at which a braking pedal is stepped down, and a load sensor 14 configured to detect a vehicle load.

The vehicle braking control apparatus 20 can obtain data of the sensor 10, and analyze and calculate the data. The vehicle braking control apparatus 20 includes a vehicle braking control module, and the vehicle braking control module may include a calculation module 21 and a braking allocation module 22. The calculation module 21 obtains data of the sensor 10, and analyzes and calculates the data, to formulate a corresponding braking scheme and braking force. The analysis of the data by the calculation module 21 includes: obtaining a vehicle speed when braking is required, and formulating a braking scheme based on the speed. The calculation of the data by the calculation module 21 includes: calculating an angular acceleration by using a step-down angle of the braking pedal obtained by the braking pedal angle sensor 13; calculating total required braking force of a current vehicle based on the step-down angle and the angular acceleration; calculating a real-time electrical power of the motor; and calculating a friction coefficient of the mechanical braking apparatus. The braking allocation module 22 is configured to allocate mechanical braking force and/or motor braking force based on the total required braking force calculated by the calculation module 21 and in combination with the braking scheme. The vehicle braking control apparatus 20 may be implemented by using software, hardware, or a combination of software and hardware, or may be a part or all of an electronic device. In some embodiments, the vehicle braking control apparatus 20 may be an ESP vehicle body electronic stabilization program, an ESC (Electronic Stability Control) electronic stability control apparatus, a VSC (Vehicle Stability Control) vehicle body stability control apparatus, a VSA (Vehicle Stability Assist) vehicle body stability auxiliary apparatus, a DSC (Dynamic Stability Control) dynamic stability control apparatus, or the like.

The mechanical braking control apparatus 40 is configured to control operation of the mechanical braking apparatus 60. The motor control apparatus 30 is configured to control running of the motor 50. The mechanical braking control apparatus 40 and the motor control apparatus 30 receive a braking force instruction output by the braking allocation module, and control, according to the braking force instruction, the motor 50 and the mechanical braking apparatus 60 to perform a corresponding braking operation.

The alarm apparatus 70 is configured to give an alarm to a user when the mechanical braking apparatus 60 is faulty or overheated.

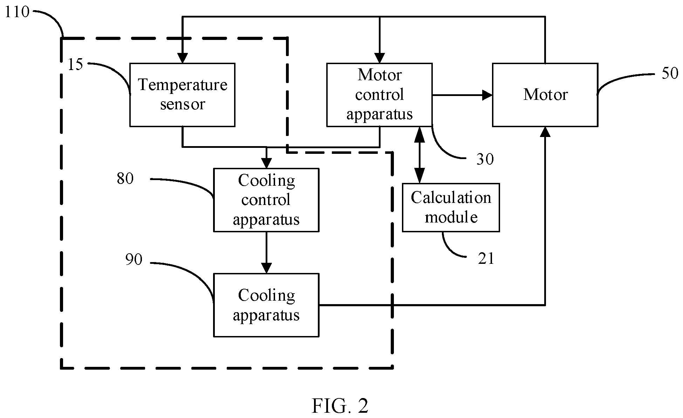

In addition, the vehicle braking system 100 further includes a cooling system 110 configured to cool the vehicle. The following describes the cooling system 110 with reference to FIG. 2.

FIG. 2 is a schematic diagram of a structure of a cooling system 110 for cooling the motor according to an embodiment of this application.

The cooling system 110 may include a temperature sensor 15, a cooling control apparatus 80, and a cooling apparatus 90. The temperature sensor 15 is configured to obtain a temperature of the motor 50. The cooling control apparatus 80 is connected to the temperature sensor 15 and is configured to cool the motor based on the temperature control cooling apparatus 90 of the motor 50. The cooling control apparatus 80 is further connected to the motor control apparatus 30. The motor control apparatus 30 is configured to obtain a real-time current of the motor 50. The calculation module 21 calculates the real-time thermal power of the motor 50 based on the real-time current of the motor 50. The cooling control apparatus 80 controls, based on the real-time temperature of the motor 50 and the real-time thermal power of the motor 50, the cooling apparatus 90 to perform a cooling operation. The cooling apparatus 90 may include a cooling pump driven by electricity.

In the conventional technology, there is a specific delay in detecting a temperature of the motor by using the temperature sensor. In view of this, after creative efforts, the inventor adds an operation of reading the current of the motor in real time to calculate the real-time thermal power of the motor on the basis of a conventional temperature regulation solution, and provides the real-time thermal power of the motor as an input to the cooling control apparatus. Compared with the conventional technology, in this application, whether the motor is overheated can be determined based on the real-time thermal power of the motor. This improves efficiency of the cooling apparatus and implements more accurate motor temperature control.

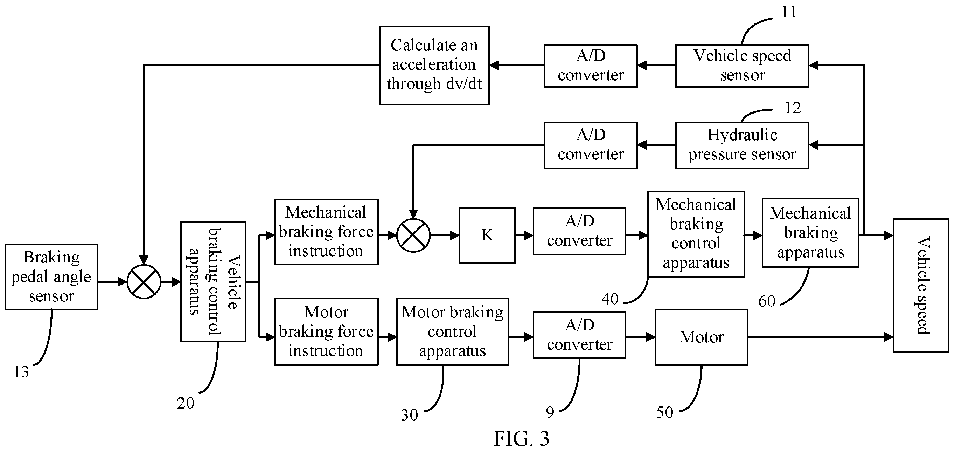

With reference to FIG. 3, FIG. 4, and FIG. 7, the following describes working manners of components of the vehicle braking system 100 provided in embodiments of this application.

FIG. 3 shows a working procedure of the vehicle braking control system according to an embodiment of this application.

When a driver steps on a braking pedal, the braking pedal angle sensor 13 obtains a stepping angle of the braking pedal, and the speed sensor 11 obtains a vehicle speed.

The vehicle braking control apparatus 20 performs the following processing based on the obtained vehicle speed and the stepping angle:

determining a braking solution based on the obtained vehicle speed, calculating an angular acceleration based on the stepping angle of the braking pedal, and calculating current total required braking force of the vehicle based on the angular acceleration and the angle. Mechanical braking force and motor braking force are allocated according to the braking scheme and the total required braking force, and a generated mechanical braking force instruction and a motor braking force instruction are input to the mechanical braking control apparatus and the motor reverse braking control apparatus.

The mechanical braking control apparatus 40 and the motor reverse braking control apparatus 50 correspondingly control the mechanical braking apparatus 60 and the motor 50 to perform braking according to the received mechanical braking force instruction and the motor braking force instruction, to reduce the vehicle speed.

During a braking process, the vehicle speed changes continuously (usually gradually decreases) as the braking operation is performed. Therefore, the vehicle braking control apparatus 20 continuously adjusts the braking scheme, the mechanical braking force, and the motor braking force based on the vehicle speed. As shown in FIG. 3, the speed sensor 11 continuously obtains a current vehicle speed, and feeds back the current vehicle speed to the vehicle braking control apparatus 20. The vehicle braking control apparatus 20 calculates a current vehicle acceleration based on the current vehicle speed, and adjusts the allocation of the braking force with reference to the angle and angular acceleration of the braking pedal, to implement dynamic adjustment of the braking force.

The hydraulic strength sensor 12 continuously obtains current hydraulic strength in the mechanical braking apparatus, and feeds back the current hydraulic strength of the mechanical braking apparatus to the vehicle braking control apparatus 20. Braking force generated by the mechanical braking apparatus 60 is proportional to the current liquid pressure (the parameter is K) in the mechanical braking apparatus. The vehicle braking control apparatus 20 performs calculation, updates the generated mechanical braking force instruction again, and inputs the updated instruction to the mechanical braking control apparatus, to dynamically adjust the mechanical braking force. The speed sensor 11 and the hydraulic strength sensor 12 feed back a speed and hydraulic strength of the vehicle in real time, so that closed-loop control of the vehicle braking system is implemented, so that the vehicle can execute different braking solutions based on the vehicle speed. This improves braking reliability.

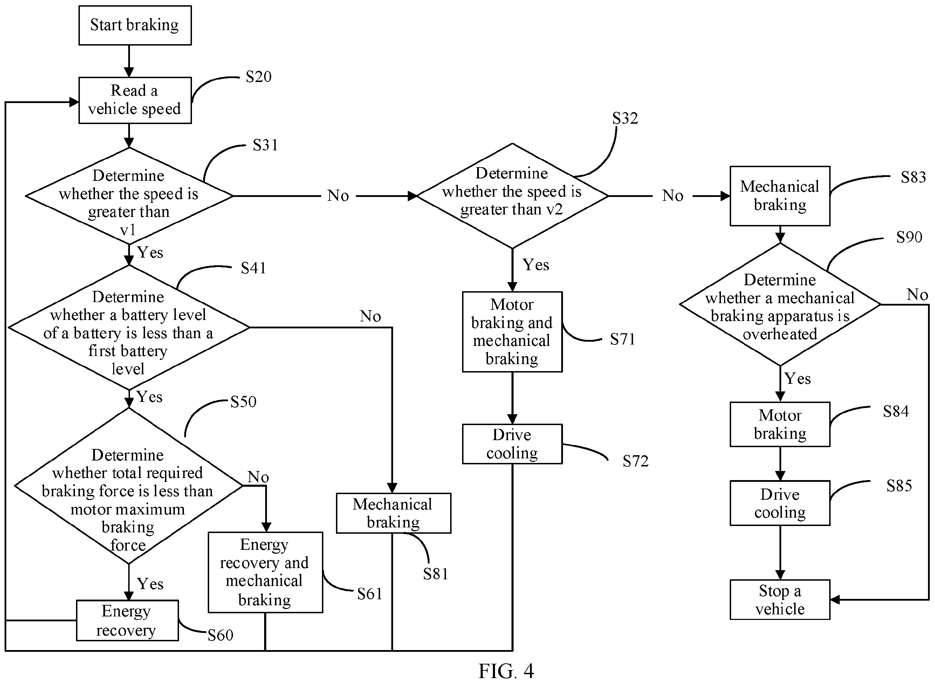

FIG. 4 shows a control procedure in which a vehicle braking control apparatus controls, based on a vehicle speed, a vehicle to perform a braking solution according to an embodiment of this application.

In embodiments of this application, "energy recovery and mechanical braking" means that the vehicle performs both energy recovery braking and mechanical braking; and "motor reverse superposed mechanical braking" means that the vehicle performs both motor reverse braking and mechanical braking.

When a vehicle driver steps on a braking pedal, vehicle braking starts, and the vehicle braking control apparatus performs step S20 to read a vehicle speed collected by a speed sensor.

Step S31: Determine whether a vehicle speed is greater than a first speed v1.

If the vehicle speed is greater than the first speed v1, step S41 is performed: determining whether a battery level is less than a first battery level.

If the battery level is greater than the first battery level, it is considered that the battery level is sufficient and energy recovery braking cannot be performed. In this case, step S81 is performed: A vehicle braking control apparatus controls a vehicle to perform mechanical braking.

If the battery level is less than the first battery level, step S50 is performed: determining whether total required braking force of the vehicle is less than maximum braking force that can be provided by a motor.

If the total required braking force of the vehicle is less than the maximum braking force that can be provided by the motor, step S60 is performed: The vehicle braking control apparatus controls the vehicle to perform energy recovery braking, the motor generates power to recover energy, and the battery is charged.

If the total required braking force of the vehicle is greater than the maximum braking force that can be provided by the motor, step S61 is performed: The vehicle braking control apparatus controls the vehicle to perform energy recovery braking and mechanical braking, where braking force generated by the mechanical braking is superposed with braking force generated by the energy recovery braking.

If the vehicle speed is less than the first speed v1, step S32 is performed: determining whether the vehicle speed is greater than a second speed v2.

If the vehicle speed is greater than the second speed v2, step S71 is performed: The vehicle control apparatus controls the vehicle to perform motor reverse braking and mechanical braking. When the motor reverse braking is performed, step S72 is performed: Electric energy generated by the motor reverse braking is used to drive a cooling apparatus to cool the motor.

If the vehicle speed is less than the second speed v2, step S83 is performed: The vehicle braking control apparatus controls the vehicle to perform the mechanical braking. After step S83 is performed, step S90 is further performed: determining whether a mechanical braking apparatus is overheated.

If the mechanical braking apparatus is not overheated, step S83 continues to be performed, and the vehicle performs the mechanical braking until the vehicle stops. If the mechanical braking apparatus is overheated, step S84 is performed: The vehicle control apparatus controls the vehicle to perform the mechanical braking and the motor reverse braking. When the motor reverse braking is performed, step S85 is performed: The electric energy generated by the motor reverse braking is used to drive the cooling apparatus to cool the motor, and the vehicle performs the motor braking and mechanical braking until the vehicle stops.

Because a structure of the mechanical braking apparatus is compact, it is difficult to install a temperature sensor on the mechanical braking apparatus. Therefore, a temperature of the mechanical braking apparatus is difficult to obtain directly through measurement by a mechanical temperature sensor. Based on a correspondence between the temperature of the mechanical braking apparatus and a friction coefficient of a lining of the mechanical braking apparatus, a calculation module of the vehicle braking control apparatus obtains the temperature of the mechanical braking apparatus by calculating the friction coefficient. The friction coefficient is obtained by using the following method:

The vehicle speed is obtained by using a speed sensor 11, a vehicle load is obtained by using a load sensor 14, and current mechanical braking hydraulic strength is obtained by using the hydraulic strength sensor 12.

The vehicle braking control apparatus 20 calculates an actual braking torque T according to the following formula:

$$T = (m_1 + m_2) \cdot (d_v/d_t) \cdot R \quad \text{Formula (1)}$$

T is the actual braking torque, m1 is the vehicle load, m2 is a vehicle weight, $d_v/d_t$ is a vehicle acceleration, and R is a wheel radius.

The actual braking torque includes a mechanical braking torque T1 and a motor braking torque T2. The motor braking torque T2 is calculated by using a motor speed, a motor voltage, and a motor external characteristic curve. The mechanical braking torque T1 can be calculated by using a difference between the actual braking torque T and the motor braking torque T2.

The friction coefficient of the lining of the current mechanical braking apparatus is calculated based on the mechanical braking torque T1 by using the following formula:

$$u = \dfrac{T1}{P \cdot S \cdot r} \quad \text{Formula (2)}$$

u is the friction coefficient of the lining of the mechanical braking apparatus, P is the hydraulic strength, r is a lining radius of the mechanical braking apparatus, and S is a lining area of the mechanical braking apparatus. When the friction coefficient exceeds a first threshold, it may be determined that the temperature of the mechanical braking apparatus exceeds a predetermined temperature and the mechanical braking apparatus is overheated. When the friction coefficient of the lining of the mechanical braking apparatus is less than 0.2 to 0.3, it may be determined that the temperature of the mechanical braking apparatus exceeds the predetermined temperature and the mechanical braking apparatus is overheated.

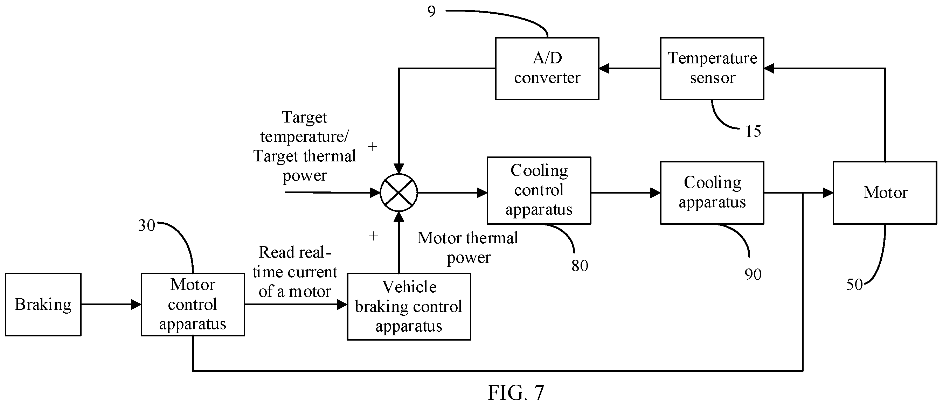

FIG. 7 shows a working procedure of a cooling system according to an embodiment of this application.

When the driver steps on the braking pedal, the motor control apparatus 30 reads a real-time current of the motor 50, and the calculation module of the vehicle braking control apparatus calculates real-time thermal power of the motor based on the real-time current of the motor 50.

The temperature sensor 15 of the motor obtains a temperature of the motor

The cooling control apparatus obtains the real-time thermal power of the motor 50 and the temperature of the motor, and determines, based on the thermal power of the motor 50 and/or the temperature of the motor 50, whether the motor is overheated. When the motor temperature exceeds a target temperature or the motor thermal power exceeds target thermal power, the cooling control apparatus controls the cooling apparatus 90 to perform cooling on the motor.

In the conventional technology, the temperature sensor 15 of the motor is usually used to detect the temperature of the motor, and then feed back the temperature of the motor to the cooling control apparatus to control cooling of the motor. However, this process has a specific delay. The motor control apparatus 30 obtains the real-time current of the motor 50, and the calculation module calculates the real-time thermal power of the motor based on the real-time current, so that a thermal state of the motor can be fed back to the cooling control apparatus 80 more quickly, and the cooling apparatus is controlled to performing cooling. In this way, cooling efficiency of the motor is improved, and the temperature of the motor is controlled more accurately.

Second implementation: vehicle braking control method

A second implementation of this application relates to a vehicle braking control method. The vehicle braking control method is implemented by controlling each component of the vehicle braking system in the first implementation of this application. The vehicle braking control method is executed by the vehicle braking system provided in the first implementation of this application.

The following describes a braking control method in embodiments of this application with reference to the accompanying drawings. The vehicle braking method in this embodiment is executed by the vehicle braking system provided in the first implementation of this application.

FIG. 4 is a schematic flowchart of a vehicle braking control method according to an embodiment of this application.

When a vehicle driver steps on a braking pedal, a braking pedal angle sensor obtains a stepping angle of the braking pedal, and a speed sensor obtains the vehicle speed. A vehicle starts braking, and a vehicle braking control apparatus performs step S20 to read the vehicle speed.

Step S31 is performed: Determine whether a vehicle speed is greater than a first speed v1.

When the vehicle speed is greater than the first speed v1, step S41 is performed: determining whether a battery level is less than a first battery level.

When the battery level is less than the first battery level, step S50 is performed to determine whether total required braking force of the vehicle is less than maximum braking force that can be provided by a motor. If yes, step S60 is performed: A vehicle braking control apparatus controls the vehicle to perform energy recovery braking.

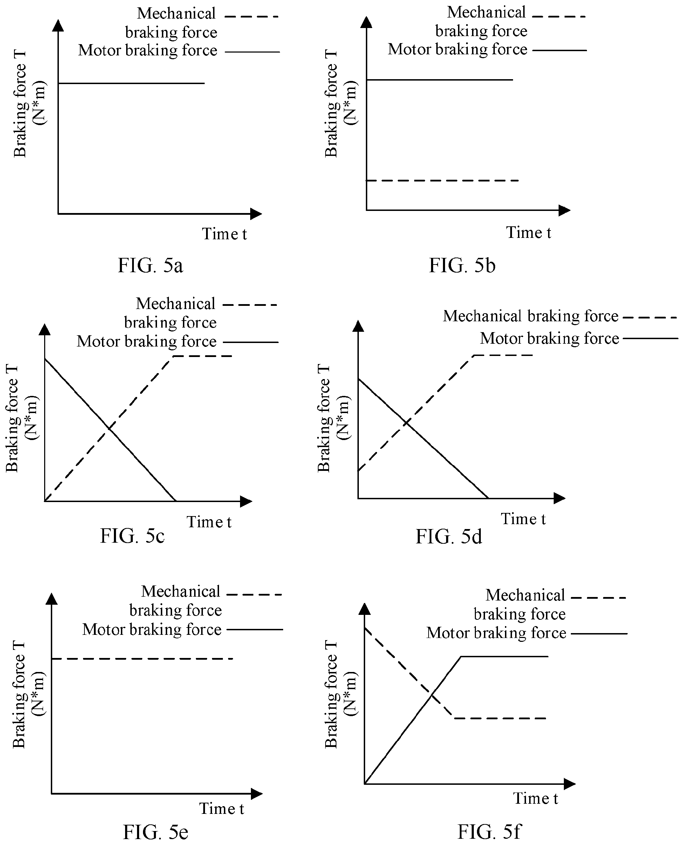

FIG. 5a is a schematic diagram of a change of motor braking force with time when the vehicle performs the energy recovery braking. The mechanical braking apparatus does not participate in braking, the motor braking force is total required braking force of the vehicle calculated by the vehicle braking control apparatus, and the motor braking force remains constant with time.

If the total required braking force of the vehicle is greater than the maximum braking force that can be provided by the motor, step S61 is performed: The vehicle control apparatus controls the vehicle to perform energy recovery and mechanical braking at the same time.

FIG. 5b shows a schematic diagram of coordinates of a change of the motor braking force and the mechanical braking force with time when the vehicle performs the energy recovery braking and the mechanical braking at the same time. The motor braking force is greater than the mechanical braking force. The mechanical braking force is a difference between braking force required by the vehicle and the maximum braking force that can be provided by the motor and that is calculated by the vehicle braking control apparatus. The motor braking force and the mechanical braking force remain constant with time.

When the battery level is greater than the first battery level, step S81 is performed: The vehicle braking control apparatus controls the vehicle to perform the mechanical braking.

The total required braking force of the vehicle can be calculated as T based on the angle of the braking pedal. Whether the vehicle is in an emergency braking state can be determined by using the angular acceleration of the braking pedal. When the angular acceleration is greater than 10rad/s$^2$, it may be determined that the vehicle is in the emergency braking state. When the vehicle is in the emergency braking state, the total required braking force may be 1.3 T. The first speed may be 20 to 40 km/h.

When the vehicle speed is less than the first speed v1, step S32 is performed: determining whether the vehicle speed is greater than a second speed v2.

If the vehicle speed is greater than the second speed v2, step S71 is performed: The vehicle braking control apparatus controls the vehicle to perform the motor reverse braking and the mechanical braking at the same time. In addition, when the motor reverse braking is performed, step S72 is performed: Electric energy generated by the motor reverse braking is used to drive the vehicle to perform cooling.

FIG. 5c and FIG. 5d are schematic diagrams of coordinates of a change of the motor braking force and the mechanical braking force with time when the vehicle performs the motor reverse braking and the mechanical braking at the same time. When the total required braking force is less than the maximum braking force that can be provided by the motor (FIG. 5c), the mechanical braking and the motor reverse braking are performed at the same time, and the vehicle braking control apparatus adjusts the mechanical braking force and the motor braking force based on the vehicle speed. At the beginning, the motor braking force is greater than the mechanical braking force. With the change of time, the vehicle speed gradually decreases, the motor braking force gradually decreases to exit, and the mechanical braking force gradually increases. When the total required braking force is greater than the maximum braking force that can be provided by the motor (FIG. 5d), the motor reverse braking and mechanical braking are performed at the same time. The motor braking force is greater than the mechanical braking force at the beginning. With the change of time, the vehicle speed gradually decreases, the motor braking force gradually decreases to exit, and the mechanical braking force gradually increases.

The second speed may be 10 to 15 km/h. When the motor reverse braking is performed, the electric energy generated by the motor can be used to drive the vehicle to perform cooling, to implement energy reuse and heat dissipation of the motor

If the vehicle speed is less than the second speed v2, step S83 is performed: The vehicle braking control apparatus controls only the vehicle to perform the mechanical braking.

FIG. 5e is a schematic diagram of coordinates of a change of the mechanical braking force with time when the vehicle performs the mechanical braking, where the mechanical braking force is constant.

After step S83 is performed, step S90 is further performed: determining whether the mechanical braking apparatus is overheated.

When the mechanical braking apparatus is overheated, step S84 is performed: The vehicle braking control apparatus controls the vehicle to perform the motor reverse braking on the basis of the mechanical braking. In addition, when the motor reverse braking is performed, step S85 is performed: Electric energy generated by the motor reverse braking is used to drive the vehicle to perform cooling.

FIG. 5f is a schematic diagram of coordinates of a change of the motor braking force and the mechanical braking force with time when the vehicle performs the motor reverse braking and the mechanical braking at the same time and when the mechanical braking apparatus is overheated, and the motor reverse braking is available. At this time, the electric mechanism power gradually increases, and the mechanical braking gradually decreases.

The above is the braking scheme adopted by the vehicle at different speeds. As the vehicle speed decreases, the braking scheme may change. In addition, in braking schemes, the proportion of the required mechanical braking force and motor braking force to the total required braking force may also change accordingly.

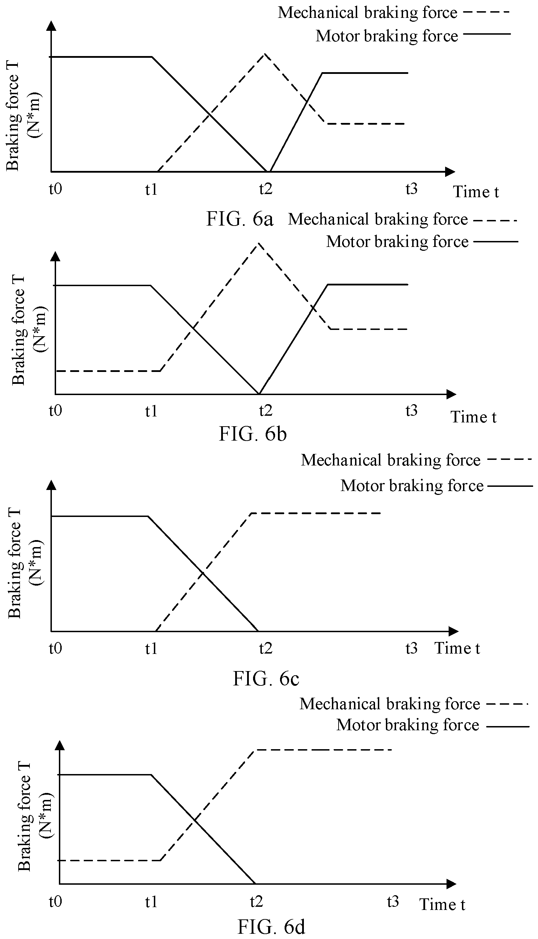

Referring to FIG. 6a to FIG. 6d, the following describes, with reference to different scenarios, changes of a braking solution, mechanical braking force, and motor braking force in a process from braking the vehicle at a speed greater than the first speed to stopping the vehicle.

Scenario 1: The total required braking force of the vehicle is less than the maximum braking force that can be provided by the motor, and the mechanical braking apparatus is running properly. FIG. 6c shows a situation in which changes of the mechanical braking force and the motor braking force with time when the vehicle performs braking at a speed greater than the first speed until the vehicle stops completely. The vehicle performs the energy recovery braking, the mechanical braking and the motor reverse braking, and the mechanical braking in sequence from stepping down the braking pedal to complete stop of the vehicle (that is, in a time period from t0 to t3). At the moment t0, the vehicle performs the energy recovery braking. When the energy recovery is performed, the vehicle speed continuously decreases, until at the moment t1, the vehicle speed decreases from greater than the first speed to less than the first speed and greater than the second speed. In this case, the vehicle braking control apparatus controls the vehicle to perform the mechanical braking and the motor reverse braking, obtains hydraulic strength of the mechanical braking apparatus by using the hydraulic strength sensor, and adjusts the mechanical braking force and the motor braking force based on the vehicle deceleration calculated based on the vehicle speed. In other words, as the vehicle speed decreases, the mechanical braking force gradually increases, and the motor braking force gradually decreases. When the mechanical braking and the motor reverse braking are performed, the vehicle speed continuously decreases until the vehicle speed is less than the second speed at the moment t2. In this case, the vehicle braking control apparatus controls the vehicle to perform the mechanical braking until the vehicle stops (at the moment t3).

Scenario 2: The total required braking force of the vehicle is less than the maximum braking force that can be provided by the motor, and the mechanical braking apparatus is overheated.

In the following description, processing in scenario 2 that is the same as that in scenario 1 is described by referring to content in scenario 1, or is merely briefly described.

As shown in FIG. 6a, in a time period (that is, a time period from t0 to t2) in which the vehicle speed decreases from the first speed to the second speed, the vehicle uses the same braking solution as that in scenario 1, that is, first performs the energy recovery braking, and then performs the mechanical braking and the motor reverse braking. After the moment t2, the vehicle speed is less than the second speed. Because the mechanical braking apparatus is overheated, the vehicle performs the mechanical braking and the motor reverse braking after the moment t2, and the mechanical braking force gradually decreases with time, and the motor braking force gradually increases with time until the vehicle stops at the moment t3.

Scenario 3: The total required braking force of the vehicle is greater than the maximum braking force that can be provided by the motor, and the mechanical braking apparatus is running properly.

In the following description, processing in scenario 3 that is the same as that in scenario 1 is described by referring to content in scenario 1, or is merely briefly described.

FIG. 6d shows a situation in which changes of the mechanical braking force and the motor braking force with time when the vehicle performs braking at a speed greater than the first speed until the vehicle stops completely. The vehicle performs the energy recovery and the mechanical braking, the mechanical braking and the motor reverse braking, and the mechanical braking in sequence until the vehicle stops. At the moment t0, the vehicle speed is greater than the first speed, the total required braking force of the vehicle is greater than the maximum braking force that can be provided by the motor, the vehicle performs the energy recovery and the mechanical braking, and the mechanical braking force is a difference between the braking force required by the vehicle and the maximum braking force that can be provided by the motor. At the moment t1, when the vehicle speed is less than the first speed and greater than the second speed, the vehicle performs the mechanical braking and the motor reverse braking. At the moment t2, the vehicle speed is less than the second speed, and the vehicle performs the mechanical braking until the vehicle stops.

Scenario 4: The total required braking force of the vehicle is greater than the maximum braking force that can be provided by the motor, and the mechanical braking apparatus is overheated.

A difference between the scenario 4 and the scenario 3 lies in that the mechanical braking apparatus of the vehicle is overheated. As shown in FIG. 6b, in a time period (that is, a time period from t0 to t2) in which a vehicle speed decreases from a first speed to a second speed, the vehicle uses the braking solution that is the same as that in the scenario 3, that is, first performs the energy recovery and the mechanical braking, and then performs the mechanical braking and the motor reverse braking. After the moment t2, the vehicle speed is less than the second speed. Because the mechanical braking apparatus is overheated, the vehicle performs the mechanical braking and the motor reverse braking, and the mechanical braking force gradually decreases, and the motor braking force gradually increases until the vehicle stops at the moment t4.

The energy recovery braking is performed at a high speed, so that energy recovery efficiency can be improved. At a medium speed (less than the first speed and greater than the second speed), the motor reverse superposed with the mechanical braking is used to ensure a braking effect. At a low speed (less than the second speed), the mechanical braking is used to reduce electric energy consumed by the braking, and avoid a problem of overheating or failure of the mechanical braking apparatus caused by frequent braking when the vehicle moves downhill for a long time or at a high speed.

By using the friction coefficient of the lining of the mechanical braking apparatus to determine whether the mechanical braking apparatus is overheated, the problem that the mechanical braking temperature cannot be obtained through measurement because the mechanical braking apparatus cannot be installed with a temperature sensor is resolved.

Third implementation: vehicle braking system

The third implementation of this application provides a vehicle braking system. The vehicle braking method provided in the second implementation of this application is implemented by connecting and disconnecting control switches in the control system, so that a vehicle uses different braking solutions based on a speed.

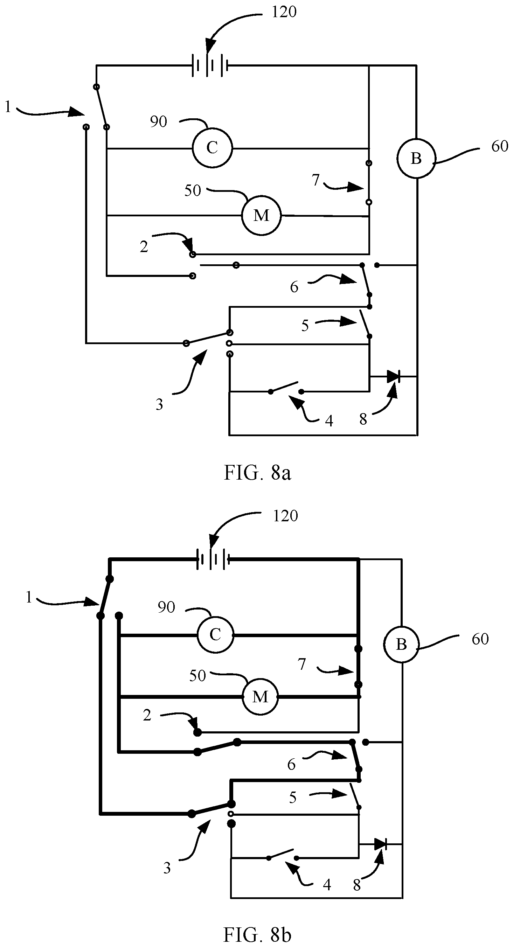

FIG. 8a to FIG. 8g are schematic circuit diagrams of a vehicle braking system according to this application. As shown in FIG. 8a to FIG. 8g, the vehicle braking system provided in an embodiment of this application includes a motor 50, a mechanical braking apparatus 60, a cooling apparatus 90, a battery 120, and a plurality of control switches. The control switches include a braking pedal control switch 1, an energy recovery switch 2, a speed sensor control switch 3, a mechanical braking apparatus overheat switch 4, a braking force supplementary switch 5, a battery level control switch 6, a braking switch 7, and a diode 8.

The braking pedal control switch 1 can control switching between a normal driving state and a braking state of a vehicle. When the vehicle is in the normal driving state, the braking pedal control switch 1 is located in a driving limit (right limit). When a driver steps down a braking pedal to brake, the braking pedal control switch 1 is located in a braking limit (left limit).

The speed sensor control switch 3 can change a connection status based on a vehicle speed. When the vehicle speed is greater than a first speed, the speed sensor switch is located at a first speed limit (upper limit). When the vehicle speed is less than the first speed and greater than a second speed, the speed sensor control switch is located at a second speed limit (middle limit). When the vehicle speed is less than the second speed, the speed sensor control switch is located at a third speed limit (lower limit).

The battery level control switch 6 can change a connection status based on a battery level of a vehicle battery. When the battery level is greater than a first battery level, the battery level control switch 6 is located at a first battery level limit (right limit); or when the battery level is less than a first battery level, the battery level control switch 6 is located at a second battery level limit (left limit).

The mechanical braking apparatus overheat switch 4 can change a connection status based on a temperature of the mechanical braking apparatus or a friction coefficient of a lining of the mechanical braking apparatus. According to a correspondence between the friction coefficient of the lining of the mechanical braking apparatus and the temperature of the mechanical braking apparatus, when the friction coefficient of the lining of the mechanical braking apparatus exceeds a first threshold, it can be determined that the temperature of the mechanical braking apparatus exceeds a predetermined temperature or the mechanical braking apparatus overheat switch 4 is in a connected state.

The braking force supplementary switch 5 is configured to be connected when motor braking force or mechanical braking force is insufficient.

The energy recovery switch 2 is configured to control whether the motor 50 performs energy recovery. When the motor 50 performs the energy recovery, the energy recovery switch 2 is located at the lower limit.

The braking switch 7 is configured to control whether the vehicle performs mechanical braking or motor reverse braking. When the vehicle performs the mechanical braking or the motor reverse braking, the braking switch is disconnected.

The following describes connection and disconnection of the control switches of the braking system with reference to a working mode of the vehicle.

In the following, "not involved" means that a switch may be located at any limit or may be connected or disconnected without affecting a connection status of a circuit.

1. Vehicle traveling without braking

FIG. 8a shows a connected state of the circuit when the vehicle is in a non-braking state. The braking pedal control switch 1 is located in a driving limit (right limit), the speed sensor control switch 3 is not involved, the mechanical braking apparatus overheat switch 4 is not involved, the braking force supplementary switch 5 is disconnected, the battery level control switch 6 is located in a left limit (the first power limit), the energy recovery switch 2 is not involved, and the braking switch 7 is connected. In this case, the motor 50 and the vehicle battery 120 form a series circuit, and the cooling apparatus 90 and the motor 50 form a parallel circuit. In this case, the battery 120 separately supplies power to the motor 50 and the cooling apparatus 90, and the motor 50 runs under driving of the battery 120.

2. Energy recovery

FIG. 8b is a connected state of the circuit when the vehicle in an energy recovery state. The braking pedal control switch 1 is located at a braking limit (left limit), the speed sensor control switch 3 is located at an upper limit (the first speed limit), the mechanical braking apparatus overheating switch 4 is not involved, the braking force supplementary switch 5 is disconnected, the battery level control switch 6 is located at a left limit (the first power limit), the energy recovery switch 2 is located at the lower limit, and the braking switch 7 is connected. In this case, the motor 50 and the vehicle battery 120 form a series circuit, and the cooling apparatus 90 and the motor 50 form a parallel circuit. In this case, the battery 120 stops supplying power to the motor 50, and drives the motor rotor to rotate under an inertia effect of the vehicle, so that the motor continuously runs, and supplies generated electric energy to the battery 120.

3. Energy recovery and mechanical braking

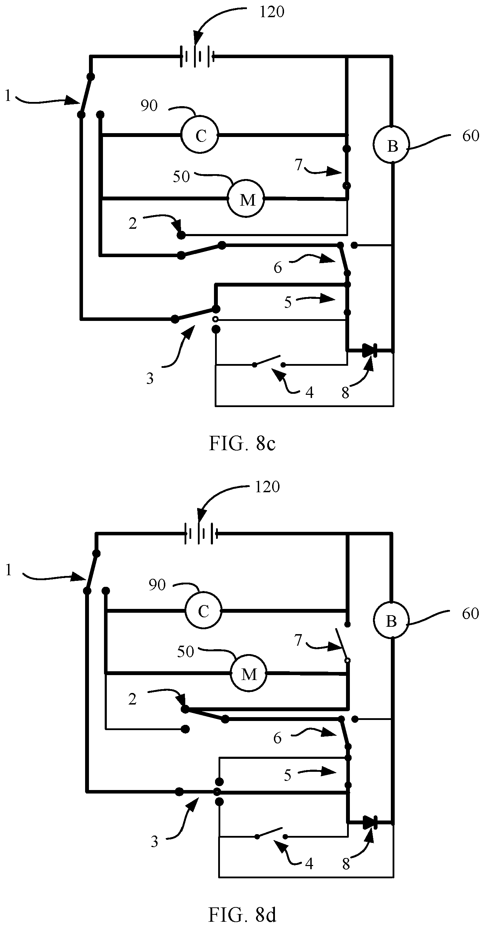

FIG. 8c shows a connection status of a circuit when the vehicle performs the energy recovery and the mechanical braking. The braking pedal control switch 1 is located at a left limit (braking limit), the speed sensor control switch 3 is located at an upper limit (the first speed limit), the mechanical braking apparatus overheat switch 4 is not involved, the braking force supplementary switch 5 is connected, the battery level control switch 6 is located at a left limit (the first power limit), the energy recovery switch 2 is located at a lower limit, and the braking switch 7 is connected. In this case, the motor 50 and the vehicle battery 120 form a series circuit, the cooling apparatus 90 and the motor 50 form a parallel circuit, and the mechanical braking apparatus 60 and the motor 50 form a parallel circuit. In this case, the motor continuously runs under the inertia of the vehicle and generates electric energy to charge the battery, and the mechanical braking apparatus 60 performs the mechanical braking.

4. Motor reverse braking and mechanical braking

FIG. 8d shows a connection status of a circuit when the vehicle performs a braking solution of the motor reverse superposed with the mechanical braking. The braking pedal control switch 1 is located at a left limit (braking limit), the speed sensor control switch 3 is located at a middle limit (the second speed limit), the mechanical braking apparatus overheat switch 4 is not involved, the braking force supplementary switch 5 is connected, the battery level control switch 6 is located at a left limit (the first power limit), the energy recovery switch 2 is located at an upper limit, and the braking switch 7 is disconnected. In this case, the motor 50, the vehicle battery 120, and the cooling apparatus 90 form a series circuit, and the mechanical braking apparatus 60 is connected in parallel to the motor 50 and the cooling apparatus 90. In this case, the vehicle battery 120 drives the motor 50 to perform reverse braking, the mechanical braking apparatus 60 performs the mechanical braking, and the electric energy generated by the motor reverse braking is used to drive the cooling apparatus 90 to perform cooling.

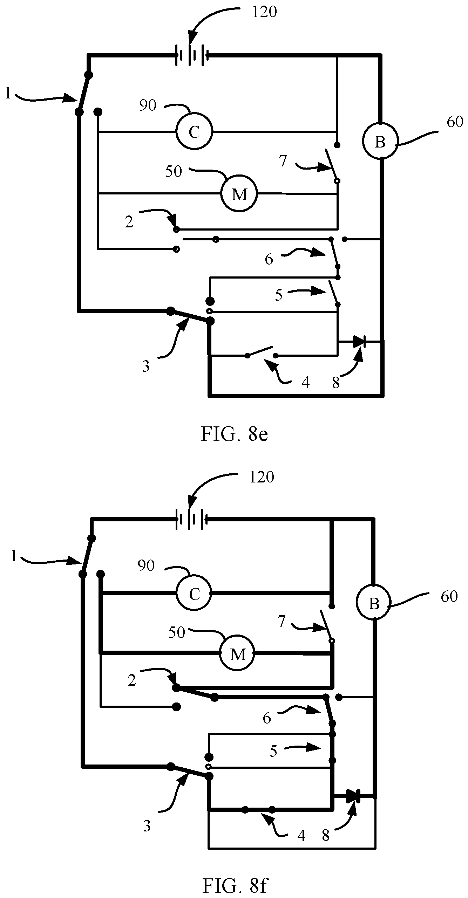

FIG. 8f shows a connection status of a circuit when the vehicle performs a braking solution of the motor reverse superposed with the mechanical braking. Different from FIG. 8d, in this case, the mechanical braking apparatus 60 is overheated and the vehicle speed is less than the second speed. The braking pedal control switch 1 is located at a left limit (braking limit), the speed sensor control switch 3 is located at a lower limit (the third speed limit), the mechanical braking apparatus overheat switch 4 is connected, the braking force supplementary switch 5 is connected, the battery level control switch 6 is located at a left limit (the first power limit), the energy recovery switch 2 is located at an upper limit, and the braking switch 7 is disconnected. In this case, the motor 50, the vehicle battery 120, and the cooling apparatus 90 form a series circuit, and the mechanical braking apparatus 60, the motor 50, and the cooling apparatus 90 form a parallel circuit. In this case, the battery 120 drives the motor 50 to perform the reverse braking, the mechanical braking apparatus 60 performs the mechanical braking, and the electric energy generated by the motor reverse braking is used to drive the cooling apparatus 90 to perform cooling.

5. Mechanical braking

FIG. 8e shows a connection status of a circuit when the vehicle performs the mechanical braking. The braking pedal control switch 1 is located at a left limit (braking limit), the speed sensor control switch 3 is located at a lower limit (a third speed limit), the mechanical braking apparatus overheat switch 4 is disconnected, the braking force supplementary switch is not involved, the battery level control switch 6 is located at a left limit (the first power limit), and the energy recovery switch 2 and the braking switch 7 are not involved. In this case, the motor 50 and the cooling apparatus 90 are disconnected from the vehicle battery 120, and only the mechanical braking apparatus 60 is connected in series to the vehicle battery 120. At this time, the mechanical braking apparatus 60 performs the mechanical braking.

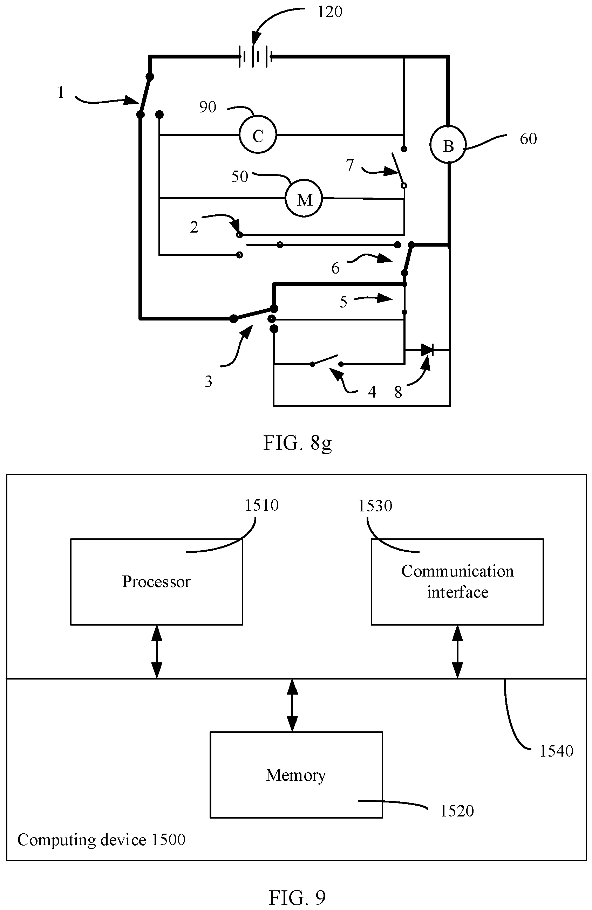

FIG. 8g shows a connected status of a circuit when the vehicle is in a mechanical braking state. Different from FIG. 8e, in this case, the battery level is greater than the first battery level, and the battery does not need to be charged regardless of the vehicle speed. The braking pedal control switch 1 is located at a left limit (braking limit), the speed sensor control switch 3 may be located at any speed limit (located at the first speed limit in the figure), the braking force supplementary switch 5 is connected, the mechanical braking apparatus overheating switch 4 is disconnected, the battery level control switch 6 is located at a right limit (the second power limit), and the energy recovery switch 2 and the braking switch 7 are disconnected. In this case, the vehicle battery 120 is disconnected from the motor 50 and the cooling apparatus 90, and the mechanical braking apparatus 60 performs the mechanical braking.

Fourth implementation: computing device

FIG. 9 is a schematic diagram of a structure of a computing device 1500 according to an embodiment of this application. The computing device 1500 includes a processor 1510, a memory 1520, a communication interface 1530, and a bus 1540.

It should be understood that the communication interface 1530 in the computing device 1500 shown in FIG. 9 may be used for communication with another device.

The processor 1510 may be connected to the memory 1520. The memory 1520 may be configured to store program code and data. Therefore, the memory 1520 may be a storage unit in the processor 1510, an external storage unit independent of the processor 1510, or a component including the storage unit in the processor 1510 and the external storage unit independent of the processor 1510.

Optionally, the computing device 1500 may further include a bus 1540. The memory 1520 and the communication interface 1530 may be connected to the processor 1510 through the bus 1540. The bus 1540 may be a peripheral component interconnect (Peripheral Component Interconnect, PCI) bus, an extended industry standard architecture (Extended Industry Standard Architecture, EISA) bus, or the like. The bus 1540 may be classified into an address bus, a data bus, a control bus, and the like. For ease of representation, only one line is used to represent the bus in FIG. 9, but this does not mean that there is only one bus or only one type of bus.

It should be understood that in this embodiment of this application, the processor 1510 may be a central processing unit (central processing unit, CPU). The processor may be alternatively another general-purpose processor, a digital signal processor (digital signal processor, DSP), an application-specific integrated circuit (application0specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. Alternatively, the processor 1510 uses one or more integrated circuits to execute a related program, to implement the technical solutions provided in embodiments of this application.

The memory 1520 may include a read-only memory and a random access memory, and provide instructions and data for the processor 1510. A part of the processor 1510 may further include a non-volatile random access memory. For example, the processor 1510 may further store information of a device type.

When the computing device 1500 runs, the processor 1510 executes computer executable instructions in the memory 1520 to perform the operation steps of the foregoing method.

It should be understood that the computing device 1500 according to this embodiment of this application may correspond to a corresponding execution body of the method according to embodiments of this application, and the foregoing and other operations and/or functions of modules in the computing device 1500 are separately intended to implement corresponding procedures of the methods in embodiments. For simplicity, details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Fifth implementation: computer-readable storage medium

An embodiment of this application further provides a computer-readable storage medium. The computer-readable storage medium stores a computer program. The program is used by a processing apparatus to perform a braking method and calculation. The method includes at least one of the solutions described in the foregoing embodiments.

The computer storage medium according to this embodiment of this application may be any combination of one or more computer-readable media. The computer-readable medium may be a computer-readable signal medium or a computer-readable storage medium. The computer-readable storage medium may be but is not limited to electric, magnetic, optical, electromagnetic, infrared, or a semiconductor system, an apparatus, or a device, or any combination thereof. More specific examples (a non-exhaustive list) of the computer-readable storage medium include an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In this document, the computer-readable storage medium may be any tangible medium including or storing a program that may be used by an instruction execution system, apparatus, or device, or be used in combination with an instruction execution system, apparatus, or device.

A computer-readable signal medium may include a data signal propagated in a baseband or propagated as part of a carrier, where the data signal carries computer-readable program code. Such a propagated data signal may take a variety of forms, including but not limited to an electromagnetic signal, an optical signal, or any suitable combination thereof. The computer-readable signal medium may alternatively be any computer-readable medium other than the computer-readable storage medium. The computer-readable medium may send, propagate, or transmit the program used by the instruction execution system, apparatus, or device, or used in combination with the instruction execution system, apparatus, or device.

The program code included in the computer-readable medium may be transmitted by using any suitable medium, including but not limited to Wi-Fi, a wire, an optical cable, an RF, and the like, or any suitable combination thereof.

Computer program code for performing the operations in this application may be written in one or more programming languages, or a combination thereof. The programming languages include an object-oriented programming language, such as Java, Smalltalk, and C++, and also include a conventional procedural programming language, such as a "C" language or a similar programming language. The program code may be executed entirely on a user computer, or some may be executed on a user computer as a separate software package, or some may be executed on a user computer while some is executed on a remote computer, or the code may be entirely executed on a remote computer or a server. When a remote computer is involved, the remote computer may be connected to a user computer by using any type of network, including a local area network (LAN) or a wide area network (WAN), or may be connected to an external computer (for example, connected by using an Internet service provider through the Internet).

Sixth implementation: computer program

The sixth implementation of this application provides a computer program. By running the program, a computer can perform the braking method provided in embodiments of this application, or function as the foregoing braking control apparatus.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computing device (which may be a personal computer, a service apparatus, a network device, or the like) to perform all or some of the steps of the methods described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or a compact disc.

It should be noted that the foregoing are merely example embodiments of this application and used technical principles. A person skilled in the art may understand that this application is not limited to specific embodiments described herein, and a person skilled in the art may make various obvious changes, readjustments, and replacements without departing from the protection scope of this application. Therefore, although this application is described in detail with reference to the foregoing embodiments, this application is not limited to the foregoing embodiments. More other equivalent embodiments may be included without departing from the concept of this application, and all fall within the protection scope of this application.

**Claims**

1. A vehicle braking control method, comprising:

   obtaining a vehicle speed;
   when the vehicle speed is greater than a first speed, performing energy recovery braking, generating power by using a motor to recover energy, and charging a battery;
   when the vehicle speed is less than the first speed and greater than a second speed, performing motor reverse braking and mechanical braking, wherein braking force generated by the motor reverse braking is superposed with braking force generated by the mechanical braking, and electric energy generated by the motor is consumed by a power consumption apparatus; and
   when the vehicle speed is less than the second speed, performing mechanical braking, wherein the mechanical braking generates braking force.

2. The method according to claim 1, wherein when the mechanical braking is performed, the motor reverse braking is further performed when a temperature of a mechanical braking apparatus exceeds a predetermined temperature, and the braking force generated by the motor reverse braking is superposed with the braking force generated by the mechanical braking.

3. The method according to claim 2, wherein when the braking force generated by the motor reverse braking is superposed with the braking force generated by the mechanical braking, the braking force of the motor reverse braking increases with a speed decrease, and the braking force of the mechanical braking decreases with a speed decrease.

4. The method according to claim 2 or 3, wherein the temperature of the mechanical braking apparatus is obtained by calculating a friction coefficient based on a correspondence between the temperature of the mechanical braking apparatus and a friction coefficient of a lining of the mechanical braking apparatus, and the friction coefficient is obtained by using the following method:

   obtaining a total required braking torque based on a product of the vehicle speed, a vehicle load, and a wheel radius;
   obtaining a motor braking torque based on a motor speed, a motor voltage, and a motor external characteristic curve;
   obtaining a mechanical braking torque based on a difference between the total required braking torque and the motor braking torque; and
   obtaining the friction coefficient of the lining of the mechanical braking apparatus based on the mechanical braking torque and hydraulic strength, a lining radius of the mechanical braking apparatus, and a lining area of the mechanical braking apparatus.

5. The method according to any one of claims 1 to 4, wherein when the motor reverse braking is performed, the electric energy generated by the motor is used to drive a cooling unit to perform a cooling operation on the motor.

6. The method according to claim 5, wherein the cooling operation comprises:

when a braking instruction is received, calculating motor thermal power based on an obtained current of the motor and the current of the motor; and
controlling the cooling unit to perform the cooling operation based on the motor thermal power.

7. The method according to claim 6, wherein the cooling operation further comprises: controlling the cooling unit to perform the cooling operation on the motor based on an obtained motor temperature.

8. The method according to claim 1, wherein when the energy recovery braking is performed, the mechanical braking is further performed when total required braking force is greater than maximum braking force that can be provided by the energy recovery braking, and the braking force generated by the mechanical braking is superposed with braking force generated by the energy recovery braking.

9. The method according to claim 1, wherein when the motor reverse braking and the mechanical braking are performed, the braking force of the motor reverse braking is initially greater than the braking force of the mechanical braking, the braking force of the motor reverse braking decreases with a speed decrease, and the braking force of the mechanical braking increases with a speed decrease.

10. The method according to any one of claims 1 to 9, wherein when a battery level is less than a first battery level, the energy recovery braking is performed.

11. The method according to any one of claims 1 to 10, wherein the vehicle is an electric truck.

12. A vehicle braking control apparatus, comprising:

a vehicle speed obtaining module, configured to obtain a vehicle speed; and
a vehicle braking control module, configured to control a vehicle to perform braking based on the vehicle speed, wherein
when the vehicle speed is greater than a first speed, the vehicle braking control module is configured to: perform energy recovery braking, generate power by using a motor to recover energy, and charge a battery;
when the vehicle speed is less than the first speed and greater than a second speed, perform motor reverse braking and mechanical braking, wherein braking force generated by the motor reverse braking is superposed with braking force generated by the mechanical braking, and electric energy generated by the motor is consumed by a power consumption apparatus; and
when the vehicle speed is less than the second speed, perform mechanical braking, wherein the mechanical braking generates braking force.

13. The vehicle braking control apparatus according to claim 12, wherein when the mechanical braking is performed, the motor reverse braking is further performed when a temperature of a mechanical braking apparatus exceeds a predetermined temperature, and the braking force generated by the motor reverse braking is superposed with the braking force generated by the mechanical braking.

14. The vehicle braking control apparatus according to claim 13, wherein when the braking force generated by the motor reverse braking is superposed with the braking force generated by the mechanical braking, the braking force of the motor reverse braking increases with a speed decrease, and the braking force of the mechanical braking decreases with a speed decrease.

15. The vehicle braking control apparatus according to claim 13 or 14, wherein the temperature of the mechanical braking apparatus is obtained by calculating a friction coefficient based on a correspondence between the temperature of the mechanical braking apparatus and a friction coefficient of a lining of the mechanical braking apparatus, and the friction coefficient is obtained by using the following method:

obtaining a total required braking torque based on a product of the vehicle speed, a vehicle load, and a wheel radius;
obtaining a motor braking torque based on a motor speed, a motor voltage, and a motor external characteristic curve;
obtaining a mechanical braking torque based on a difference between the total required braking torque and the motor braking torque; and
obtaining the friction coefficient of the lining of the mechanical braking apparatus based on the mechanical braking torque and hydraulic strength, a lining radius of the mechanical braking apparatus, and a lining area of the mechanical braking apparatus.

16. The vehicle braking control apparatus according to any one of claims 12 to 15, wherein when the motor reverse braking is performed, the electric energy generated by the motor is used to drive a cooling unit to perform a cooling operation on the motor

17. The vehicle braking control apparatus according to claim 16, wherein the cooling operation comprises:

    when a braking instruction is received, calculating motor thermal power based on an obtained current of the motor and the current of the motor; and
    controlling the cooling unit to perform the cooling operation based on the motor thermal power

18. The vehicle braking control apparatus according to claim 17, wherein the cooling operation further comprises: controlling the cooling unit to perform the cooling operation on the motor based on an obtained motor temperature.

19. The vehicle braking control apparatus according to claim 12, wherein when the energy recovery braking is performed, the mechanical braking is further performed when total required braking force is greater than maximum braking force that can be provided by the energy recovery braking, and the braking force generated by the mechanical braking is superposed with braking force generated by the energy recovery braking.

20. The vehicle braking control apparatus according to claim 12, wherein when the motor reverse braking and the mechanical braking are performed, the braking force of the motor reverse braking is initially greater than the braking force of the mechanical braking, the braking force of the motor reverse braking decreases with a speed decrease, and the braking force of the mechanical braking increases with a speed decrease.

21. The vehicle braking control apparatus according to any one of claims 12 to 20, wherein when a battery level is less than a first battery level, the energy recovery braking is performed.

22. The vehicle braking control apparatus according to any one of claims 12 to 21, wherein the vehicle is an electric truck.

23. A vehicle braking system, comprising:

    a motor, a mechanical braking apparatus, a battery, a vehicle braking control apparatus, a speed obtaining apparatus, and a plurality of control switches, wherein
the vehicle braking control apparatus is configured to control connection and disconnection of the control switches based on a vehicle speed obtained by the speed obtaining apparatus in real time, to control vehicle braking, wherein
when the vehicle speed is greater than a first speed, energy recovery braking is performed, wherein a vehicle speed control switch is located at a first speed limit, an energy recovery switch is located at a first energy recovery limit, a braking switch is connected, the motor and the battery form a series circuit, power is generated by using the motor to recover energy, and the battery is charged;
when the vehicle speed is less than the first speed and greater than a second speed, motor reverse braking and mechanical braking are performed, wherein a vehicle speed control switch is located at a second speed limit, an energy recovery switch is located at a second energy recovery limit, a braking switch is disconnected, a braking force supplementary switch is connected, the motor and the battery form a series circuit, the mechanical braking apparatus and the motor form a parallel circuit, braking force generated by the motor reverse braking is superposed with braking force generated by the mechanical braking, and electric energy generated by the motor is consumed by a power consumption apparatus; and
when the vehicle speed is less than the second speed, mechanical braking is performed, wherein a vehicle speed control switch is located at a third speed limit, the mechanical braking apparatus and the battery form a series circuit, and the mechanical braking generates braking force.

24. The system according to claim 23, further comprising a mechanical braking apparatus temperature control switch, wherein when the mechanical braking is performed, the motor reverse braking is further performed when a temperature of the mechanical braking apparatus exceeds a predetermined temperature, the mechanical braking apparatus temperature control switch is connected, the mechanical braking apparatus and the motor further form a parallel circuit, and the braking force generated by the motor reverse braking is superposed with the braking force generated by the mechanical braking.

25. The system according to claim 24, wherein when the braking force generated by the motor reverse braking is superposed with the braking force generated by the mechanical braking, the braking force of the motor reverse braking increases with a speed decrease, and the braking force of the mechanical braking decreases with a speed decrease.

26. The system according to claim 23 or 24, wherein the temperature of the mechanical braking apparatus is obtained by calculating a friction coefficient based on a correspondence between the temperature of the mechanical braking apparatus and a friction coefficient of a lining of the mechanical braking apparatus, and the friction coefficient is obtained by using the following method:

obtaining a total required braking torque based on a product of the vehicle speed, a vehicle load, and a wheel radius;
obtaining a motor braking torque based on a motor speed, a motor voltage, and a motor external characteristic curve;
obtaining a mechanical braking torque based on a difference between the total required braking torque and the motor braking torque; and
obtaining the friction coefficient of the lining of the mechanical braking apparatus based on the mechanical braking torque and hydraulic strength, a lining radius of the mechanical braking apparatus, and a lining area of the mechanical braking apparatus.

27. The system according to any one of claims 23 to 26, further comprising a cooling apparatus, wherein when the motor reverse braking is performed, the motor and the cooling apparatus further form a series circuit, and the electric energy generated by the motor is used to drive a cooling unit to perform a cooling operation on the motor.

28. The system according to claim 27, further comprising:
a motor control apparatus, configured to: when a braking instruction is received, obtain a current of the motor, wherein the vehicle braking control apparatus calculates motor thermal power based on the current of the motor, and the cooling control apparatus controls the cooling unit to perform the cooling operation on the motor based on the motor thermal power

29. The system according to claim 28, further comprising:

a temperature sensor, configured to obtain a temperature of the motor; and
a cooling control apparatus, configured to control the cooling apparatus to perform the cooling operation on the motor based on the temperature.

30. The system according to claim 23, wherein when the energy recovery braking is performed, the mechanical braking is further performed when total required braking force is greater than maximum braking force that can be provided by the energy recovery braking, the braking force supplementary switch is connected, the motor and the mechanical braking apparatus further form a parallel circuit, and the braking force generated by the mechanical braking is superposed with the braking force generated by the energy recovery braking.

31. The system according to claim 23, wherein when the motor reverse braking and the mechanical braking are performed, the braking force of the motor reverse braking is initially greater than the braking force of the mechanical braking, the braking force of the motor reverse braking decreases with a speed decrease, and the braking force of the mechanical braking increases with a speed decrease.

32. The system according to any one of claims 25 to 31, wherein the mechanical braking is performed when a battery level is greater than a first battery level, the battery level control switch is located at a second battery level limit, and the battery and the mechanical braking apparatus form a series circuit.

33. The system according to any one of claims 25 to 32, wherein the vehicle is an electric truck.

34. A computing device, comprising:

a bus;
a communication interface connected to the bus;
at least one processor connected to the bus; and
at least one memory, wherein the memory is connected to the bus and stores program instructions, and when the program instructions are executed by the at least one processor, the at least one processor is enabled to perform the method according to any one of claims 1 to 11.

35. A computer-readable storage medium, wherein the computer-readable storage medium stores program instructions, and when the program instructions are executed by a computer, the computer is enabled to perform the method according to any one of claims 1 to 11.

36. A computer program, comprising program instructions, wherein when the program instructions are executed by a computer, the computer is enabled to perform the method according to any one of claims 1 to 11.

11 Speed sensor

12 Hydraulic pressure sensor

13 Angle sensor

14 Load sensor

10

100

70 Alarm apparatus

20 Vehicle braking control apparatus

21 Calculation module

22 Braking allocation module

40 Mechanical braking control apparatus

60 Mechanical braking apparatus

30 Motor control apparatus

50 Motor

FIG. 1

110

15

Temperature
sensor

Motor
control
apparatus

Motor — 50

30

80

Cooling
control
apparatus

Calculation
module

21

90

Cooling
apparatus

FIG. 2

Vehicle speed

Vehicle speed sensor — 11

Hydraulic pressure sensor — 12

A/D converter

A/D converter

Calculate an acceleration through dv/dt

K

A/D converter

Mechanical braking force instruction

Mechanical braking control apparatus — 40

Mechanical braking apparatus — 60

A/D converter — 9

Motor braking control apparatus — 30

Motor — 50

Motor braking force instruction

Vehicle braking control apparatus — 20

Braking pedal angle sensor — 13

FIG. 3

```
                    ┌──────────────┐
                    │ Start braking│
                    └──────┬───────┘
                           │                    S20
                    ┌──────▼───────┐
                    │   Read a     │
                    │ vehicle speed│
                    └──────┬───────┘
                           │                    S31
                      ╱────▼────╲
                    ╱  Determine  ╲      No           ╱─────────╲      No    ┌────────────┐
                   ⟨ whether the   ⟩───────────────→ ╱ Determine  ╲─────────→│ Mechanical │  S83
                    ╲  speed is    ╱                ⟨ whether the   ⟩         │  braking   │
                     ╲ greater than╱                 ╲ speed is     ╱         └─────┬──────┘
                      ╲    v1     ╱                    ╲greater than ╱               │        S90
                       ╲────┬────╱                      ╲   v2     ╱          ╱──────▼──────╲
                          │Yes                           ╲───┬───╱         ╱  Determine     ╲  No
                     ┌────▼────╲         S41                │Yes          ⟨ whether a mechanical⟩──┐
                   ╱  Determine  ╲                     ┌─────▼─────┐        ╲ braking apparatus is╱  │
                  ⟨whether a battery ⟩      No         │   Motor   │         ╲  overheated   ╱       │
                   ╲ level of a battery╱──────────┐    │braking and│  S71     ╲──────┬──────╱        │
                    ╲is less than a   ╱           │    │ mechanical│               │Yes             │
                     ╲first battery  ╱            │    │  braking  │          ┌─────▼─────┐          │
                      ╲   level     ╱             │    └─────┬─────┘          │   Motor   │  S84      │
                       ╲────┬──────╱              │          │                │  braking  │          │
                          │Yes      S50           │    ┌─────▼─────┐          └─────┬─────┘          │
                     ╱────▼────╲                  │    │   Drive   │                │                │
                   ╱ Determine   ╲                │    │  cooling  │  S72     ┌─────▼─────┐  S85      │
                  ⟨whether total   ⟩  No          │    └───────────┘          │   Drive   │          │
                   ╲required braking╱──┐          │                           │  cooling  │          │
                    ╲force is less than╱ │         │                           └─────┬─────┘          │
                     ╲motor maximum  ╱ │          │                                 │                │
                      ╲  braking    ╱  │    ┌─────▼─────┐                      ┌─────▼─────┐          │
                       ╲  force    ╱   │    │ Mechanical│                      │  Stop a   │◄─────────┘
                        ╲───┬─────╱    │    │  braking  │                      │  vehicle  │
                          │Yes         │    └─────┬─────┘                      └───────────┘
                    ┌─────▼─────┐  ┌───▼─────┐  S81
                    │  Energy   │  │ Energy  │
                    │ recovery  │  │recovery │
                    └───────────┘  │and      │
                         S60       │mechanical│
                                   │ braking │  S61
                                   └─────────┘
```

FIG. 4

FIG. 5a

FIG. 5b

FIG. 5c

FIG. 5d

FIG. 5e

FIG. 5f

FIG. 6a

FIG. 6b

FIG. 6c

FIG. 6d

FIG. 7

FIG. 8a

FIG. 8b

FIG. 8c

FIG. 8d

FIG. 8e

FIG. 8f

FIG. 8g

FIG. 9

<div align="center">

**INTERNATIONAL SEARCH REPORT**

</div>

| International application No. |
|---|
| **PCT/CN2021/134236** |

**A. CLASSIFICATION OF SUBJECT MATTER**

B60L 7/10(2006.01)i

According to International Patent Classification (IPC) or to both national classification and IPC

**B. FIELDS SEARCHED**

Minimum documentation searched (classification system followed by classification symbols)

B60L

Documentation searched other than minimum documentation to the extent that such documents are included in the fields searched

Electronic data base consulted during the international search (name of data base and, where practicable, search terms used)

CNTXT, CNABS, CNKI, ENTXTC, VEN: 制动, 速度, 车速, 电机, 充电, 反接, 反转, 机械制动, brak+, speed, motor, generat +, charg+, revers+, mechanical brake

**C. DOCUMENTS CONSIDERED TO BE RELEVANT**

| Category* | Citation of document, with indication, where appropriate, of the relevant passages | Relevant to claim No. |
|---|---|---|
| X | CN 103192721 A (QINGDAO UNIVERSITY OF TECHNOLOGY) 10 July 2013 (2013-07-10) description, paragraphs [0023]-[0064], and figures 1-4 | 1-4, 8-15, 19-26, 30-36 |
| Y | CN 103192721 A (QINGDAO UNIVERSITY OF TECHNOLOGY) 10 July 2013 (2013-07-10) description, paragraphs [0023]-[0064], and figures 1-4 | 5-7, 16-18, 27-29 |
| Y | CN 108128171 A (CHENGDU BUS CO., LTD.) 08 June 2018 (2018-06-08) description paragraph [0032], figure 1 | 5-7, 16-18, 27-29 |
| A | CN 112092789 A (FOTON MOTOR INC.) 18 December 2020 (2020-12-18) entire document | 1-36 |
| A | CN 104002686 A (SHANGHAI ZHENHUA HEAVY INDUSTRIES CO., LTD.) 27 August 2014 (2014-08-27) entire document | 1-36 |
| A | US 6378636 B1 (FORD GLOBAL TECH. INC.) 30 April 2002 (2002-04-30) entire document | 1-36 |
| A | JP 2009173196 A (TOYOTA MOTOR CORP.) 06 August 2009 (2009-08-06) entire document | 1-36 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 February 2022** | **09 March 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<table>
<tr><td colspan="2" align="center">INTERNATIONAL SEARCH REPORT<br>Information on patent family members</td><td colspan="2" align="center">International application No.<br><br>**PCT/CN2021/134236**</td></tr>
</table>

| Patent document cited in search report | | | Publication date (day/month/year) | Patent family member(s) | | | Publication date (day/month/year) |
|---|---|---|---|---|---|---|---|
| CN | 103192721 | A | 10 July 2013 | CN | 103192721 | B | 18 February 2015 |
| CN | 108128171 | A | 08 June 2018 | | None | | |
| CN | 112092789 | A | 18 December 2020 | | None | | |
| CN | 104002686 | A | 27 August 2014 | | None | | |
| US | 6378636 | B1 | 30 April 2002 | GB | 0122307 | D0 | 07 November 2001 |
| | | | | GB | 2368664 | A | 08 May 2002 |
| | | | | GB | 2368664 | B | 15 September 2004 |
| | | | | DE | 10149897 | A1 | 01 August 2002 |
| JP | 2009173196 | A | 06 August 2009 | | None | | |

Form PCT/ISA/210 (patent family annex) (January 2015)